# EUROPEAN PATENT APPLICATION

(11) **EP 4 807 401 A1**
(43) Date of publication of application: **16.09.2026**
(21) Application number: 26164235.9
(22) Date of filing: 12.03.2026
(51) Int. Cl.: G01V 1/28, G01V 1/30

(54) **TRAVEL-TIME CONSTRAINED CORRECTION OF HIGH-RESOLUTION VELOCITY MODELS**

(30) Priority: 12.03.2025 US 202563770467 P
(71) Applicant: Services Pétroliers Schlumberger, 75007 Paris (FR); GeoQuest Systems B.V., 2514 JG The Hague (NL)
(72) Inventor: FLAGG, Garret, Houston, 77077 (US); LAPILLI, Cintia Mariela, Houston, 77077 (US)
(74) Representative: Schlumberger Intellectual Property Department

(57) **Abstract**

A first velocity model of a subsurface region, having first velocity values, and having a first spatial resolution is used to generate a reference travel-time model of reference travel-time values. A second velocity model of the subsurface region, having second velocity values is received. The second velocity model has a second spatial resolution that is higher than the first spatial resolution. The second velocity model is corrected with a corrected term, and the corrected model is processed to generate a candidate travel-time model of candidate travel-time values. The correction term is updated to minimize a measure of difference between the reference travel-time values and the candidate travel-time values, to obtain an updated correction term. The updated correction term is added to the second velocity model to obtain an updated second velocity model of the subsurface region.

## Description

### CROSS-REFERENCE TO RELATED APPLICATIONS

This application is a non-provisional application of, and hereby claims benefit under 35 U.S.C. § 119(e), to U.S. Provisional Application Serial No. 63/770,467, filed on March 12, 2025. U.S. Provisional Application Serial No. 63/770,467 is incorporated herein by reference.

### BACKGROUND

Seismic imaging workflows may combine diverse accurate subsurface velocity models in a model-building phase to support imaging, depth conversion, and interpretation. For example, model-building workflows may combine high-resolution full-waveform inversion (FWI) velocity models with smooth (low-resolution), large-scale tomographic velocity models. The diverse velocity models may be created from diverse sensing modalities and different portions of seismic acquisition. For example, ray-based modeling techniques may yield smooth, low-resolution velocity models that are well suited for representing large-scale features of kinematic structure. In contrast, full waveform inversion techniques may produce high-resolution velocity models having fine-scale features.

The mismatch between resultant velocity models generated by the diverse modeling techniques introduces several operational challenges in seismic imaging workflows. A low-resolution velocity model may be constrained or validated using well-tie measurements obtained from downhole sensors positioned at depth. The well-tie measurements may provide localized "ground-truth" information regarding actual subsurface velocities. However, techniques generating high-resolution velocity models may operate on seismic data recorded at the surface. That is, the modeling method or technique may reproduce surface-detected wavefield behavior while failing to align with deeper well-tie constraints. Thus, seismic workflow operators may encounter cases in which the high-resolution velocity model is aligned with surface-recorded seismic data but does not align with available well-tie velocity measurements. The misalignment may result in mis-ties, inaccurate depth placement of reflectors, and inconsistencies across imaging workflows.

Merging the advantages of low-resolution and high-resolution velocity models may entail alternating between the velocity models. Alternating may entail repeated smoothing, modifying, down-sampling, or degrading an existing high-resolution velocity model to be an acceptable input to ray-tracing techniques. For example, let the high-resolution velocity model be generated using FWI, and the low-resolution velocity model be generated using tomography. Users may then manually remove sharp features from the FWI model before running tomography, then manually reintegrate the removed detail back into the tomography output afterward. The manual intervention may be labor-intensive, error-prone, and may introduce artifacts or inconsistencies due to repeated model conversions and hand-edited updates. Further, conversion back and forth between a finely gridded (high-resolution) velocity model and a smooth (low-resolution) structural model may degrade the fine-scale information present in the high-resolution model and may introduce systematic model errors.

Another technical limitation arises from the differences in the data used to generate the high-resolution and low-resolution velocity models. For example, deep subsurface velocities measured by downhole or well-tie sensors may impose constraints that FWI techniques cannot satisfy when relying strictly on surface-recorded seismic data. Tomography inversion techniques, in contrast, may have capabilities to incorporate ray-based constraints that may be enriched with downhole measurements. As a result, tomography inversion techniques may generate low-resolution velocity models having accurate large-scale structure that FWI techniques may not reproduce. On the other hand, FWI techniques may yield detailed high-resolution velocity models with fine-scale features that tomography inversion techniques may not be able to recover.

Thus, a challenge arises in developing a unified method that integrates large-scale features from velocity models of well-tie sensors data, and fine-scale features from velocity models generated from on surface level data.

### SUMMARY

In general, a first velocity model of a subsurface region, having a three-dimensional (3D) grid of voxels of respective first velocity values, and having a first spatial resolution is used to generate a reference travel-time model, having a 3D grid of voxels of reference travel-time values. A second velocity model of the subsurface region, having a 3D grid of voxels of respective second velocity values is received. The second velocity model has a second spatial resolution that is higher than the first spatial resolution. The second velocity model is corrected with a corrected term, and the corrected model is processed to generate a candidate travel-time model having a 3D grid of voxels of candidate travel-time values. The correction term is updated to minimize a measure of difference between respective reference travel-time values and the candidate travel-time values, to obtain an updated correction term. The updated correction term is added to the second velocity model to obtain an updated second velocity model of the subsurface region.

### BRIEF DESCRIPTION OF DRAWINGS

FIG. 1 shows a computing system, in accordance with one or more embodiments.
FIG. 2 shows a flowchart of a method, in accordance with one or more embodiments.
FIG. 3 shows an example, in accordance with one or more embodiments.
FIGS. 4.1 and 4.2 show a computing system, in accordance with one or more embodiments.

Like elements in the various figures are denoted by like reference numerals for consistency.

### DETAILED DESCRIPTION

One or more embodiments are directed to integrating the large-scale structural features from a smooth low-resolution velocity model with the fine-scale detail of a high-resolution velocity model, while preventing degradation of the high-resolution model. Specifically, one or more embodiments are directed to a kinematic correction applied directly to the high-resolution velocity model. The kinematic correction term and the low-resolution velocity model may belong to the same solution space. A candidate travel-time model may be generated from the high-resolution velocity model combined with the correction term. The correction term may be updated to minimize a measure of difference between the candidate travel-time model and a reference travel-time model of the smooth low-resolution velocity model.

Applying the correction term to the high-resolution velocity model causes large-scale velocity features to be introduced into the high-resolution velocity model while preserving fine-scale features of the high-resolution velocity model. Because the correction term is constrained to lie in the smooth low-resolution solution space, the corrected velocity model preserves the fine-scale features while benefiting from accurate large-scale background features obtained from downhole measurements. The resulting updated high-resolution velocity model incorporates kinematic accuracy derived from deep well-tie measurements and high-resolution detail derived from the seismic surface, supporting improved seismic imaging.

One or more embodiments provide a kinematic model engine that generates travel-time models corresponding to the low-resolution velocity model and the high-resolution velocity model at the resolution of the low-resolution velocity model. The correction term may be initialized based on the low-resolution velocity model. Updates to the correction term may be computed employing an adjoint computation, or other gradient computation techniques, until a measure of difference between the two travel-time models satisfies a tolerance threshold. The resulting corrected model thus generated prevents the discarding of fine-scale high-resolution velocity model detail. Further, the corrected model matches both surface data and downhole well-tie measurements. Thus, image accuracy may be improved, further causing improvements to reflector positioning, subsurface interpretability, and overall operational efficiency.

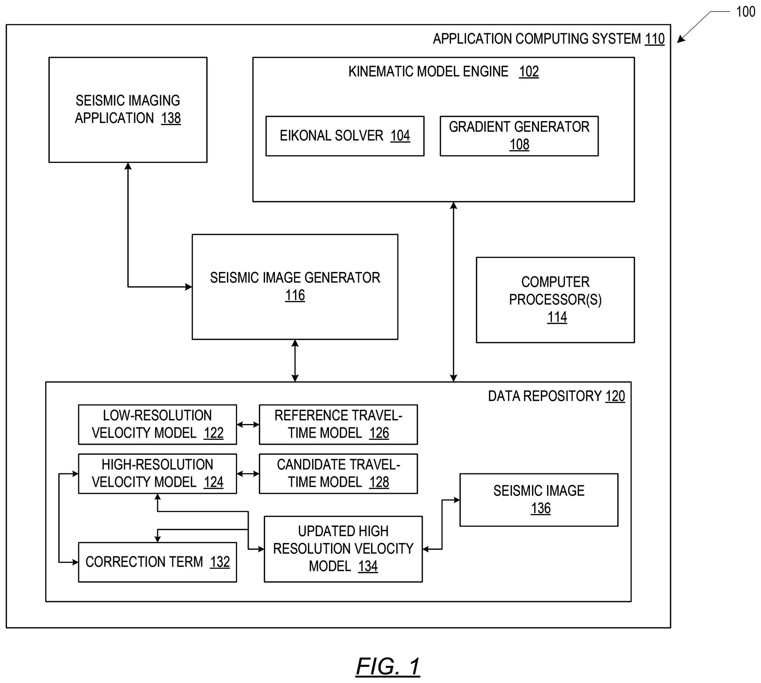

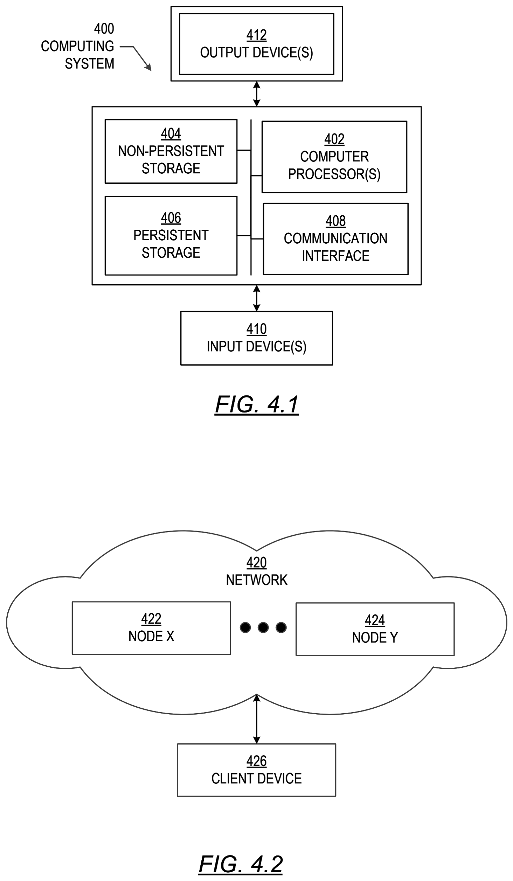

Attention is now turned to the figures. FIG. 1 shows a computing system (100), in accordance with one or more embodiments. The system shown in FIG. 1 may include an application computing system (110). The application computing system (110) is one or more computer processors, data repositories, communication devices, and supporting hardware and software. The application computing system (110) may be in a distributed computing environment. The application computing system (110) includes one or more computer processor(s) (114). The computer processors (114) are one or more hardware or virtual processors which may execute computer readable program code that defines one or more applications, such as the kinematic model engine (102), the seismic image generator (116), or the seismic imaging application (138). An example of the computer processor(s) (114) is described with respect to the computer processor(s) (402) of FIG. 4.1. Thus, the application computing system (110) is configured to execute one or more applications, such as kinematic model engine (102), the seismic image generator (116), or the seismic imaging application (138). An example of a computer system and network that may form the application computing system (110) is described with respect to FIG. 4.1 and FIG. 4.2.

Some terms as used in the current specification are described herein. The term "earth model" refers to a digital, three-dimensional (3D) representation of a subsurface region. The 3D representation may be discretized into a grid of volumetric cells storing one or more physical parameters of the underground medium. Thus, the earth model may be represented as a 3D grid. In the context of seismic imaging, the primary parameter represented in the 3D grid may be the seismic wave propagation velocity, which governs how acoustic or elastic waves travel through the subsurface. An earth model is derived from processing seismic data. Seismic data refers to time series data that may be obtained from recordings of waves generated by seismic sources and captured by arrays of receivers positioned at or near the Earth's surface. Seismic waves may undergo changes in travel time, amplitude, and frequency content in propagating through and interacting with geologic layers of differing material properties. Thus, the seismic data may encode information about the subsurface structure. Earth models, that is, 3D grid representations, having wave propagation velocity values may be referred to as velocity models.

The term "travel time" refers to the amount of time taken for a seismic wave to propagate from a source location through the subsurface to a receiver location. Travel times may be sensitive to variations in subsurface velocity. Therefore, travel times may serve as constraints for determining the geometry and physical properties of an underground (subsurface) region. Inverse problems for subsurface imaging may seek to adjust a candidate earth model so that the travel times predicted by the model match those observed in the seismic data. Travel-time values for a subsurface may be represented in an earth model, in which the 3D grid includes travel-time values. Travel time may be considered conceptually as the inverse of velocity.

The term "ray tracing" refers to a high frequency approximation to wave propagation in which energy is assumed to travel along deterministic paths, or "rays." Ray trajectories depend on spatial gradients in the velocity field of the earth model. Ray-tracing methods assume that the velocity field is smooth so that derivatives are well defined and ray paths bend smoothly according to Snell's law. Sharp or abrupt variations in velocity may violate ray-tracing assumptions and may cause numerical instabilities or incorrect kinematic predictions. An example of a technique to generate a ray-tracing model of a subsurface region is tomographic inversion. The term "fully resolved tomographic model" refers to a seismic velocity model that is generated using a tomographic inversion process. A fully resolved tomographic model represents the large-scale features recoverable from the available tomographic data for a subsurface region. A fully resolved tomographic model may not include fine-scale or high-wavenumber detail characteristics of wave-equation-based inversions. A fully resolved tomographic model may represent or depict a smooth velocity field that captures the broad spatial trends, background kinematic variations, and lateral velocity gradients that tomography is capable of resolving. In one or more embodiments, a fully resolved tomographic model may be configured as a three-dimensional grid of velocity values defined at a lower spatial resolution than that of a high-resolution full-waveform inversion model of the same region.

Velocity models generated by ray-tracing methods such as tomographic inversion may be referred to as low-resolution velocity models. The term "low-resolution velocity model" refers to a seismic velocity model that includes a multitude of voxel-level velocity values defined on a three-dimensional grid having a lower spatial resolution than a grid associated with a corresponding high-resolution velocity model (for example, a full waveform inversion (FWI) velocity model). A low-resolution velocity model generated using tomographic or tomography-based inversion methods may represent smooth or large-scale structural variations of the subsurface, precluding fine-scale detail. In one or more embodiments, the low-resolution velocity model may be considered to belong to a solution space or vector space defined by a linear smoothing operator. That is, the low-resolution velocity model may include smooth spatial components produced by or consistent with the smoothing operator.

A contrasting technique to ray tracing is wave equation modeling. "Wave equation modeling" refers to the full physics simulation of wave propagation obtained by numerically solving the acoustic or elastic wave equations. Unlike ray tracing, wave equation modeling may not depend on a smooth velocity field and may accurately represent reflections, diffractions, mode conversions, and complex interference patterns. Wave equation solvers may be more computationally expensive but may provide highly detailed information for inversion tasks such as full waveform inversion (FWI).

The term "full waveform inversion (FWI)" refers to an optimization-based technique for constructing earth models (velocity models) by comparing observed seismic waveforms with numerically simulated waveforms and adjusting the earth model to minimize the mismatch. Because FWI fits the full waveform (not just travel times), the resulting earth models may contain fine-scale structural features, sharp contrasts, and high-wavenumber variations. While highly detailed, the earth models produced by FWI may violate the smoothness assumptions used in ray tracing.

The term "high-resolution velocity model" refers to a seismic velocity model that includes a multitude of voxel-level velocity values defined on a three-dimensional grid having a higher spatial resolution than the grid on which a corresponding smooth or large-scale velocity model is defined. In one or more embodiments, a high-resolution velocity model may include fine-scale or high-wavenumber variations that are characteristic of velocity models generated using full-waveform inversion (FWI) techniques. In one or more embodiments, a high-resolution velocity model may include detailed spatial variations that do not belong to a solution space associated with a linear smoothing operator. For example, sharp, localized, or rapidly varying features may not be present in a smooth tomographic velocity model.

The term "laterally varying image-ray travel times" refers to a phenomenon exhibited by hypothetical image rays that propagate through a subsurface region. The hypothetical image rays propagate along trajectories that bend laterally in response to horizontal variations in subsurface velocity. Because the ray paths are influenced by such lateral velocity variations, the corresponding travel-time values vary laterally within the model and therefore reflect the kinematic behavior of rays used in seismic imaging processes. A travel-time model that exhibits laterally varying image-ray travel times may be generated by initializing travel-time values at a set of source locations defined by a particular source distribution. The particular source distribution may specify locations at a boundary of the subsurface region where initial travel-time values are assigned. The particular source distribution may be selected such that when the initial values are propagated through the velocity model, the propagation follows trajectories that include laterally varying image-ray travel times. In this manner, the resulting travel-time model may visually and numerically approximate the lateral bending behavior that characterizes image-ray propagation. Thus, the travel-time model exhibits the laterally varying image-ray travel times

The term "kinematically equivalent model" refers to a smoothed or otherwise modified version of an earth model that reproduces the kinematic behavior, namely, the travel time, of an original, higher resolution model. A kinematically equivalent model may differ significantly in fine-scale detail from the original model but yield substantially identical travel-time predictions for a seismic source receiver configuration. Kinematically equivalent models may be suitable for ray-tracing workflows on account of preserving the travel-time accuracy for correct imaging and tomography.

The system shown in FIG. 1 includes a data repository (120). The data repository (120) is a type of storage unit or device (*e.g.,* a file system, database, data structure, or any other storage mechanism) for storing data. The data repository (120) may include multiple different, potentially heterogeneous, storage units and/or physical storage devices.

The data repository (120) includes a low-resolution velocity model (122). The low-resolution velocity model (122) may be a tomographic or tomography-generated velocity model. The low-resolution velocity model (122) may include a multitude of voxel-based velocity values arranged in a three-dimensional (3D) grid having a first spatial resolution. The low-resolution velocity model (122) may be generated using a tomographic inversion process and may represent smooth or large-scale subsurface velocity variations recoverable from ray-theoretic data. The low-resolution velocity model (122) may be stored as a structured array, matrix, or volumetric dataset within a memory structure of the data repository (120) and may be referenced by downstream processing components for the computation of a reference travel-time model.

The data repository (120) includes a high-resolution velocity model (124). The high-resolution velocity model (124) may be a full-waveform-inversion-generated velocity model that includes a multitude of voxel-based velocity values arranged on a three-dimensional grid having a second spatial resolution. Notably, the second spatial resolution may be higher than the first spatial resolution of the low-resolution velocity model (122). The high-resolution velocity model (124) may include fine-scale or high wavenumber geologic features that may not be represented in the low-resolution velocity model (122). The high-resolution velocity model (124) may be stored as a structured array, matrix, or volumetric dataset within a memory structure of the data repository (120). The high-resolution velocity model (124) may be used as a reference model for incorporating a correction term during inversion iterations.

The data repository (120) includes a correction term (132). The correction term (132) may be defined as a smooth, large-scale velocity-model correction that is initialized based on the low-resolution velocity model (122) and applied to the high-resolution velocity model (124). The correction term (132) may lie within a solution space associated with a linear smoothing operator and may be updated iteratively based on a comparison of candidate travel-time values and reference travel-time values. In one or more embodiments, the correction term (132) may be stored as a voxel-based numerical field on the same grid as the high-resolution velocity model (124). The correction term (132) may be represented as a floating-point volume maintained persistently within the data repository (120).

The data repository (120) includes a reference travel-time model (126). The reference travel-time model (126) may be a 3D grid of travel-time values generated by processing the low-resolution velocity model (122) with an eikonal solver. The reference travel-time model (126) may include travel-time values that include laterally varying image-ray travel-time characteristics. The laterally varying image-ray travel-time characteristics may be produced by propagating initial travel-time values through the low-resolution velocity model (122). Thus, the reference travel time model (126) may correspond to the low-resolution velocity model (122). The reference travel-time model (126) may be stored as a volumetric travel-time field within the data repository (120) and may serve as a reference against which candidate travel-time models are compared.

The data repository (120) includes a candidate travel-time model (128). The candidate travel-time model (128) may be defined as a 3D grid of candidate travel-time values. In one or more embodiments, the candidate travel-time model (128) may be generated by processing the high-resolution velocity model (124) combined with the correction term (132) using an eikonal solver. The candidate travel-time model (128) may include travel-time values corresponding to the high-resolution velocity model (124) corrected with the correction term (132). In one or more embodiments, the candidate travel-time model (128) may be stored as a multidimensional travel-time dataset. Further, the candidate travel-time model (128) may be used during iterative minimization of a measure of difference between reference and candidate travel-time values.

The data repository (120) includes an updated high-resolution velocity model (134). The updated high-resolution velocity model (134) may be defined as the updated version of the high-resolution velocity model (124) after an iterative application process of the correction term (132) to the high-resolution velocity model (124) converges. The resulting updated high-resolution velocity model (134) reflects large-scale features of the low-resolution velocity model (122) while retaining fine-scale features of the original high-resolution velocity model (124). The updated high-resolution velocity model (134) may be stored as a refined volumetric velocity representation. The updated high-resolution velocity model (134) may be used in place of the high-resolution velocity model (124) after convergence of the iterative application process.

The data repository (120) includes a seismic image (136). The seismic image (136) may be defined as a representation of subsurface reflectivity, structural geometry, or other seismic attributes generated using the updated high-resolution velocity model (134). The seismic image (136) may be produced by applying a seismic imaging process, such as migration, which uses the updated high-resolution velocity model as an input. The seismic image (136) may be stored as a two-dimensional or three-dimensional digital image file, volume, or attribute cube within the data repository (120), and may be transmitted to a seismic imaging application for further interpretation.

The application computing system (110) further includes a kinematic model engine (102). The kinematic model engine (102) is a software or application-specific hardware, which, when executing on a computer processor, is configured to generate and update travel-time models and high-resolution velocity models for a subsurface region. In one or more embodiments, the kinematic model engine (102) may may be configured to generate a reference travel-time model and a candidate travel-time model. The kinematic model engine (102) may be further configured to compute a measure of difference between the reference and candidate travel-time models. The kinematic model engine (102) may be further configured to and update a correction term of a high-resolution velocity model based on the computed measure of difference. In one or more embodiments, the kinematic model engine (102) may include the functionality for executing an iterative update process in which the correction term is modified until the measure of difference satisfies a tolerance threshold. In one or more embodiments, the kinematic model engine (102) may store intermediate and final results in a data repository and may interact with other components of a seismic processing system to transmit a seismic image to a seismic imaging application.

The kinematic model engine (102) further includes an eikonal solver (104). The eikonal solver (104) may be configured to apply an eikonal equation to a velocity model to generate a travel-time model representing travel-time values for a subsurface region. In one or more embodiments, the eikonal solver (104) may apply an eikonal equation to the low-resolution velocity model (122) to generate the reference travel-time model (126). The eikonal solver (104) may further apply the eikonal equation to the high-resolution velocity model (124) corrected with the correction term (132) to generate the candidate travel-time model (128). In one or more embodiments, the eikonal solver (104) may propagate initial travel-time values along a multitude of voxel positions identified by a source distribution, and the propagation may produce travel-time values that include laterally varying image-ray travel-time behavior.

The kinematic model engine (102) further includes a gradient generator (108). The gradient generator (108) may be configured to determine a gradient value associated with a measure of difference between the reference travel time model (126) and the candidate travel-time model (128). In one or more embodiments, the gradient generator (108) may generate the gradient value using a computer-executed adjoint computation that determines the influence of variations in travel-time values on the measure of difference. In one or more embodiments, the adjoint computation may include evaluating an adjoint equation that characterizes the variations of the travel-time values as the travel-time values propagate through the model domain. In one or more embodiments, the gradient generator (108) may generate the gradient value using other gradient-computation methods, including an ensemble Kalman method, a Monte-Carlo Markov chain method, or a stochastic-gradient method. In one or more embodiments, the gradient value generated by the gradient generator (108) may be used by the kinematic model engine (102) to modify a correction term associated with a high-resolution velocity model. The modification may be performed until the measure of difference between the reference travel-time model (126), and the candidate travel-time model (128) satisfies a tolerance threshold.

The application computing system (110) includes a seismic image generator (116) configured to produce imaging outputs, such as zero-offset stacks or migrated volumes, using a ray-based forward model shown as ray-tracing model (118). In one or more embodiments, the kinematic model engine (102) may output the output velocity model that honors the first-arrival kinematics of the input velocity model. The seismic image generator (116) may then use the output velocity model to perform ray-based imaging or tomography, obviating the implementation of manual kinematic corrections.

The application computing system (110) includes a seismic imaging application (136). The seismic imaging application (138) receives seismic images generated by the seismic image generator (116) to provide geophysical interpretation, visualization, and downstream analysis tools for end-users such as geophysicists or seismic processors. The seismic imaging application (138) may be configured to receive the output velocity model, and the seismic image (136) and perform higher-level imaging, interpretation, or decision-support workflows. For example, the seismic imaging application (138) may provide horizon picking, fault detection, reservoir characterization, velocity-model QC, or interactive visualization of the migrated seismic volume generated by the seismic image generator (116). In one illustrative example, the seismic imaging application (138) may display a seismic image derived using the kinematically equivalent output velocity model. The seismic imaging application therefore represents a consumption environment for the processed results produced by the kinematic model engine (102) and the seismic image generator (116).

While FIG. 1 shows a configuration of components, other configurations may be used without departing from the scope of one or more embodiments. For example, various components may be combined to create a single component. As another example, the functionality performed by a single component may be performed by two or more components.

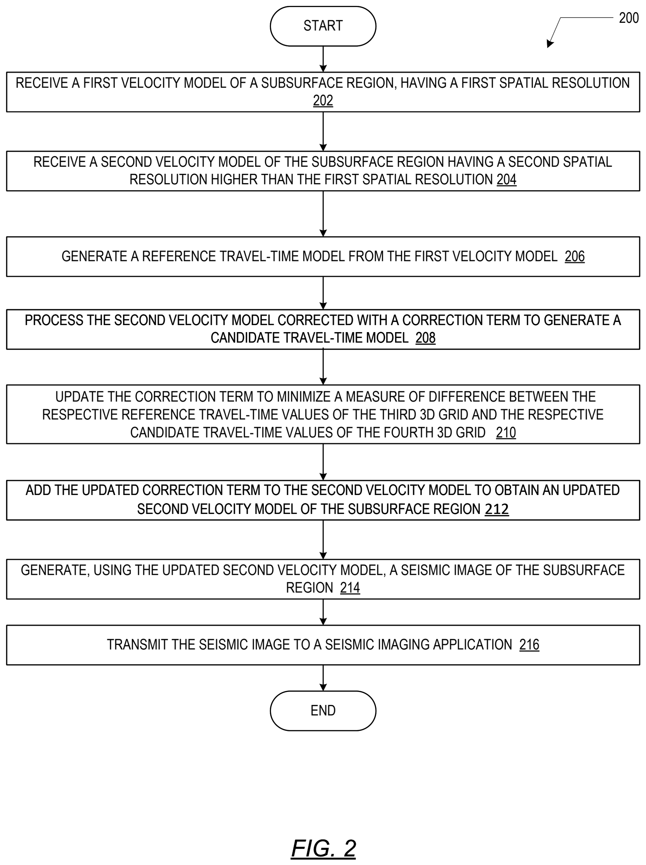

FIG. 2 shows a flowchart 200 of a method for generating a kinematically equivalent ray-traceable velocity model of a subsurface region, in accordance with one or more embodiments. The ray-traceable velocity model may be kinematically equivalent to a high-resolution, high-wavenumber velocity model generated from waveforms of sound waves bounced through the subsurface region. The high-resolution velocity model may be generated using methods such as full wave inversion. The method of FIG. 2 may be implemented using the system of FIG. 1 and one or more of the steps may be performed on or received at one or more computer processors. While the various steps in the flowchart 200 are presented and described sequentially, at least some of the steps may be executed in different orders, may be combined or omitted, and at least some of the steps may be executed in parallel. Furthermore, the steps may be performed actively or passively.

In the method of FIG. 2, the first velocity model described in flowchart 200 may refer to the low-resolution velocity model of the data repository. Further, the second velocity model may refer to the high-resolution velocity model of the data repository.

In Block 202, a first velocity model of a subsurface region having a first spatial resolution is received. In one or more embodiments, the first velocity model may include a three-dimensional grid of voxels including respective first velocity values. Further, the first velocity model may be a smooth or large-scale velocity model representing background kinematic information of the subsurface region. For example, the first velocity model may be generated by a tomography model. In one or more embodiments, the first velocity model may belong to a first vector space defined by a linear smoothing operator, and the first vector space may include smooth or large-scale velocity models. That is, if *S* is a linear smoothing operator, then the first velocity model, *v_{S}* belongs in the vector space *R* which is the solution space of the linear smoothing operator *S*. The definition of the first velocity model may be expressed as: *v_{S}* ∈ *R*(*S*), wherein *R*(*S*) is the range of *S*.

In Block 204, a second velocity model of the subsurface region having a second spatial resolution, higher than the first spatial resolution, is received. In one or more embodiments, the second velocity model may include a second 3D grid of voxels including respective second velocity values. In one or more embodiments, the second velocity model may be a high-resolution velocity model including higher-wavenumber details that may not be present in the first velocity model, for example the second velocity model may be generated by an FWI model. Further, the second velocity model may belong to a second vector space that is mutually exclusive from the first vector space defined by the linear smoothing operator. That is, the second velocity model v may not belong to the vector space *R* which is the solution space of the linear smoothing operator *S*. That is, *v* ∉ *R*(*S*)*.*

In Block 206, a reference travel-time model is generated from the first velocity model. In one or more embodiments, the first velocity model may be processed with an eikonal solver to generate a reference travel-time model corresponding to the first velocity model. In one or more embodiments, the reference travel-time model may include a third 3D grid of voxels including respective reference travel-time values. In one or more embodiments, generating the reference travel-time model may include selecting a source distribution of initial travel-time values. In one or more embodiments, the source distribution may be an approximation of initial values that include laterally varying image-raw travel times propagating through the first velocity model. Accordingly, the initial travel-time values may be assigned to a subset of voxels corresponding to a boundary portion of the reference travel-time model. Thus, the boundary conditions may be chosen such that the solution of the eikonal equation corresponds to a travel-time field having image-ray characteristics. Further, the eikonal solver may propagate the initial travel-time values through the third 3D grid using the first velocity model to obtain the reference travel-time values. In one or more embodiments, the grid values of the reference travel-time model may be values that include laterally varying image-ray travel times. In one or more embodiments, the eikonal solver may use the eikonal equation shown in Equation (1): ${\left|∇{τ}^{∗}\right|}^{2} = \frac{1}{{v}_{s}^{2}} ,$

Equation (1) represents the eikonal equation. Equation (1) describes how travel time increases as a hypothetical wavefront moves through a medium with local velocity (or slowness). Specifically, the earliest arrival time of the wavefront at the individual voxels of the 3D grid is computed. In Equation (1), |∇*τ**| represents the magnitude of a spatial gradient of the travel-time at a point in the subsurface region. The spatial gradient is a measure of how fast the travel-time at point *x* changes in diverse directions. The travel-time data *τ** may be determined by evaluating the eikonal equation shown as Equation (1). Equation (1) propagates the arrival-time surface through the first velocity model. The resulting travel-time values populate a corresponding reference travel-time model having a corresponding 3D grid. In this manner, the reference travel-time model may be populated by the propagated travel-time values of the top surface through the first velocity model.

In Block 208, the second velocity model corrected with a correction term is processed to generate a candidate travel-time model. In one or more embodiments, the correction term of the second velocity model may be initialized based on the first velocity model. In one or more embodiments, the correction term, δc, may be a discretized, regularly gridded correction field defined on the grid of the second velocity model. Further, in one or more embodiments, the correction term may be defined in the first vector space R(S) defined by the linear smoothing operator S. In one or more embodiments, the correction term may be initialized as a zero-valued smooth field. In certain other embodiments, the correction term may be initialized as another smooth field belonging to the first vector space.

In one or more embodiments, the candidate travel-time model may include a fourth 3D grid of voxels including respective candidate travel-time values. Generating the candidate travel-time model may include generating a corrected second velocity model, including the second velocity model and the corrected term. Further, a source distribution of initial travel-time values may be selected. The initial values of the source distribution may be assigned to a boundary portion of the candidate travel-time model. The eikonal solver may propagate, using the corrected second velocity model, the initial travel-time values through the fourth 3D grid to obtain the candidate travel-time values. In one or more embodiments, the grid values of the candidate travel-time model may include laterally varying image-ray travel time patterns. In one or more embodiments, propagating may include evaluating the grid values of the candidate travel-time model at the first spatial resolution of the first velocity model. In one or more embodiments, the eikonal solver may use the eikonal equation shown as Equation (2): ${\left|∇τ\right|}^{2} = \frac{1}{{\left(v+δc\right)}^{2}} , δc ∈ R \left(S\right)$

In Equation (2), *τ* is the candidate travel-time model obtained by solving Equation (2). *V* represents the second velocity model of the subsurface region having a second spatial resolution that is higher than the first spatial resolution of the first velocity model. Notably, the candidate travel-time model is computed at a spatial resolution corresponding to the first spatial resolution of the first velocity model.

In Block 210, the correction term is updated to minimize a measure of difference between the respective reference travel-time values of the third 3D grid and the respective candidate travel-time values of the fourth 3D grid. An updated correction term is thus obtained. In one or more embodiments, the steps of Block 210 may include iteratively performing operations, including generating a corrected second velocity model. The corrected second velocity model includes the second velocity model to which the correction term is added. The operations may further include computing the candidate travel-time model of the corrected second velocity model. The measure of difference between the candidate travel-time model and the reference travel-time model may be computed. In one or more embodiments, the measure of difference may be computed in accordance with Equation (3): ${\int \left|τ-{τ}^{∗}\right|}^{2}$

In Equation (3), *τ* represents the candidate travel-time model and *τ** represents the reference travel-time model.

Furthermore, a gradient value of the measure of difference may be computed. The correction term may be modified using the gradient value. The iterations may be performed until the measure of difference satisfies a tolerance threshold. In one or more embodiments, an adjoint computation function may be executed to determine the gradient value of the measure of difference. The adjoint computation function may evaluate the gradient value in accordance with Equation (4): $∇ ⋅ \left(λ∇τ\right) = {τ}^{∗} - τ$

In Equation (4), *τ* denotes the candidate travel-time model computed on the corrected second velocity model (*v + δc*), in accordance with Equation (2). The measure of difference between *τ* and *τ** drives the update of *δc.* The term ∇*τ* is the gradient of the candidate travel-time model and is a vector of partial derivatives. ∇*τ* characterizes how fast the travel-time value changes in space and therefore points in the direction of the steepest increase of travel time. ∇*τ* may indicate how travel time changes locally. The adjoint equation uses ∇*τ* to infer how perturbations propagate through the model. The term *λ* is an adjoint field introduced by the adjoint method. *λ* represents a dual field or Lagrange multiplier associated with the forward equation. ∇·() denotes the divergence operator, which measures how much a vector field "spreads out" or "converges" at each point, indicating how changes in the gradient of *τ* influence the overall misfit, spatially distributed across the model. Setting the divergence to zero means that the adjoint field *λ* may be chosen such that the divergence of *λ*∇*τ* is zero throughout the domain.

The adjoint equation evaluated by the adjoint method function determines how variations in the travel-time field influence the misfit used in the inversion. The adjoint equation solves for an adjoint field *λ* so that the divergence of *λ* scaled by the travel-time gradient is zero, and this adjoint field is then used to compute a gradient value that updates the correction term *δc.*

In other embodiments, the gradient computation method may include an ensemble Kalman method, a Monte-Carlo Markov chain method, or a stochastic-gradient method.

In Block 212, the updated correction term is added to the second velocity model to obtain an updated velocity model. In one or more embodiments, the corrected second velocity model may be assigned as the updated second velocity model, upon completion of the iterative process.

In Block 214, a seismic image of the subsurface region is generated using the updated second velocity model. In one or more embodiments, the seismic image may be generated by applying the updated second velocity model in a seismic imaging process such as migration or reverse-time migration. In one or more embodiments, the seismic image may represent subsurface reflectivity, structural features, or other seismic attributes associated with the updated second velocity model.

In Block 216, the seismic image is transmitted to a seismic imaging application. In one or more embodiments, the seismic image may be transmitted to a display system, data storage system, cloud-based application, interpretation system, or another seismic imaging application for visualization, analysis, or further processing. In one or more embodiments, the seismic imaging application may include software for interpretation, quality control, or integration into a geophysical workflow.

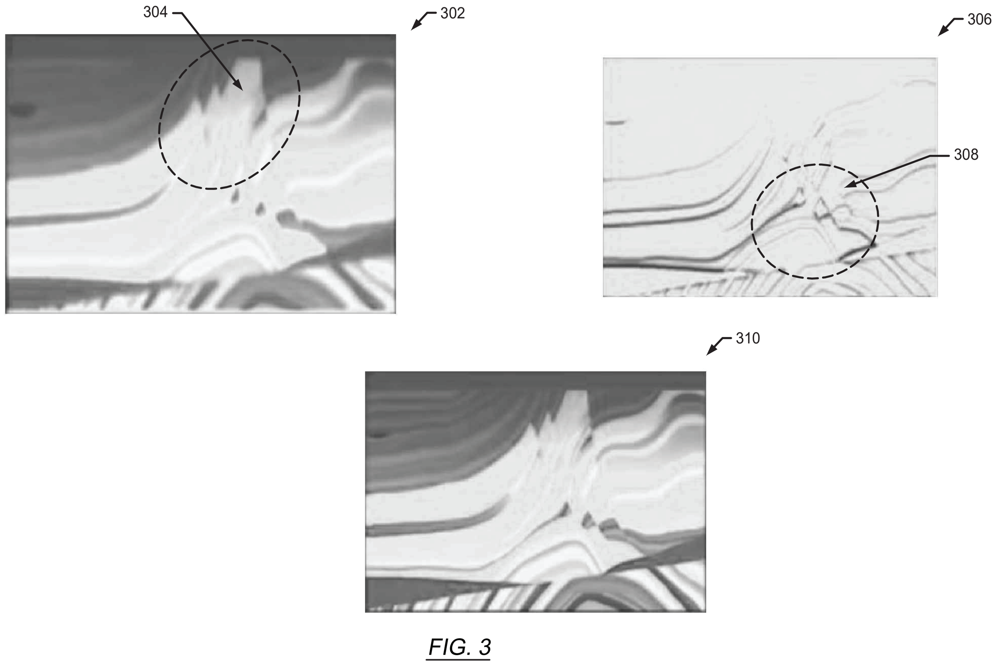

FIG. 3 shows examples of seismic images generated from low-resolution and high-resolution velocity models, in accordance with one or more embodiments. The following example is for explanatory purposes only and is not intended to limit the scope of one or more embodiments.

Block 302 shows a seismic image that may be generated by a low-resolution velocity model of a subsurface region. For example, Block 302 may be generated using tomographic inversion methods that produce a multitude of velocity values arranged on a three-dimensional grid having a coarse spatial resolution. The low-resolution velocity model of Block 302 may include large-scale features, such as broad lateral variations and smoothly varying background velocity structures, as depicted in Section 304. The features of Section 304 may be characteristic of ray-theoretic or high-frequency tomographic methods, which are capable of resolving long-wavelength kinematic structure but generally do not recover fine-scale detail.

The seismic image of Block 310 may be obtained from a high-resolution velocity model. As shown in Block 310, the seismic image may contain fine-scale features. The fine-scale features may conceptually be extracted, as shown in Block 306. The high-resolution velocity model may be obtained from a full-waveform inversion process.

The underlying velocity grid of the seismic image of Block 306 may include a multitude of velocity values defined on a finer spatial grid than the underlying low-resolution velocity grid from which the seismic image of Block 302 is generated. Block 306 may include sharp gradients, localized velocity contrasts, and high-wavenumber features representative of complex subsurface structure. Section 308 shows an example of such fine-scale features, which may include abrupt changes in velocity that FWI methods are capable of recovering from surface-recorded seismic wavefields. The fine-scale features, although highly detailed, may not align with the large-scale background velocity structure observed in the seismic image generated by the low-resolution velocity model shown in Block 302. A reason may be that the FWI process relies primarily on surface measurements and lacks constraints from well-tie or downhole sensors.

The method of FIG. 2 may incorporate the large-scale, laterally varying structures in Block 302 and retain the fine-scale feature details of Block 306. The method of FIG. 2 may allow a correction term to be determined based on a difference between a reference travel-time model and a candidate travel-time model. Further, the correction term may introduce large-scale tomographic structure, while preventing the removal or degrading of the sharp features originally present in the FWI-generated velocity model.

The example of FIG. 3 further illustrates that the disclosed method may improve subsurface modeling by combining information obtained from different sensing modalities, such as downhole or well-tie measurements represented in the low-resolution model and surface-acquired seismic data represented in the high-resolution model. For example, the low-resolution (large scale) features of the underlying low-resolution velocity model of the seismic image shown in Block 302 may be incorporated into the underlying high-resolution velocity model of the seismic image of Block 310. The image generated from the updated high-resolution velocity model therefore may provide more accurate background kinematics than the FWI model alone and may preserve more fine-scale detail than the tomographic model alone, resulting in a velocity model suitable for improved seismic imaging and interpretation.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 4.1, the computing system (400) may include one or more computer processor(s) (402), non-persistent storage device(s) (404), persistent storage device(s) (406), a communication interface (408) (*e.g*., Bluetooth interface, infrared interface, network interface, optical interface, *etc*.), and numerous other elements and functionalities that implement the features and elements of the disclosure. The computer processor(s) (402) may be an integrated circuit for processing instructions. The computer processor(s) (402) may be one or more cores, or micro-cores, of a processor. The computer processor(s) (402) includes one or more processors. The computer processor(s) (402) may include a central processing unit (CPU), a graphics processing unit (GPU), a tensor processing unit (TPU), combinations thereof, *etc.*

The input device(s) (410) may include a touchscreen, keyboard, mouse, microphone, touchpad, electronic pen, or any other type of input device. The input device(s) (410) may receive inputs from a user that are responsive to data and messages presented by the output device(s) (412). The inputs may include text input, audio input, video input, *etc.,* which may be processed and transmitted by the computing system (400) in accordance with one or more embodiments. The communication interface (408) may include an integrated circuit for connecting the computing system (400) to a network (not shown) (*e.g*., a local area network (LAN), a wide area network (WAN) such as the Internet, mobile network, or any other type of network) or to another device, such as another computing device, and combinations thereof.

Further, the output device(s) (412) may include a display device, a printer, external storage, or any other output device. One or more of the output device(s) (412) may be the same or different from the input device(s) (410). The input device(s) (410) and output device(s) (412) may be locally or remotely connected to the computer processor(s) (402). Many different types of computing systems exist, and the aforementioned input device(s) (410) and output device(s) (412) may take other forms. The output device(s) (412) may display data and messages that are transmitted and received by the computing system (400). The data and messages may include text, audio, video, *etc.,* and include the data and messages described above in the other figures of the disclosure.

Software instructions in the form of computer readable program code to perform embodiments may be stored, in whole or in part, temporarily or permanently, on a non-transitory computer readable medium such as a solid-state drive (SSD), compact disk (CD), digital video disk (DVD), storage device, a diskette, a tape, flash memory, physical memory, or any other computer readable storage medium. Specifically, the software instructions may correspond to computer readable program code that, when executed by the computer processor(s) (402), is configured to perform one or more embodiments, which may include transmitting, receiving, presenting, and displaying data and messages described in the other figures of the disclosure.

The computing system (400) in FIG. 4.1 may be connected to, or be a part of, a network. For example, as shown in FIG. 4.2, the network (420) may include multiple nodes (*e.g.,* node X (422) and node Y (424), as well as extant intervening nodes between node X (422) and node Y (424)). Each node may correspond to a computing system, such as the computing system shown in FIG. 4.1, or a group of nodes combined may correspond to the computing system shown in FIG. 4.1. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (400) may be located at a remote location and connected to the other elements over a network.

The nodes (*e.g.,* node X (422) and node Y (424)) in the network (420) may be configured to provide services for a client device (426). The services may include receiving requests and transmitting responses to the client device (426). For example, the nodes may be part of a cloud computing system. The client device (426) may be a computing system, such as the computing system shown in FIG. 4.1. Further, the client device (426) may include or perform all or a portion of one or more embodiments.

The computing system of FIG. 4.1 may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, *e.g.,* data presented as actual data values through text, or rendered by the computing device into a visual representation of the data, such as through visualizing a data model.

As used herein, the term "connected to" contemplates multiple meanings. A connection may be direct or indirect (*e.g*., through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.,* first, second, third, *etc*.) may be used as an adjective for an element (*i.e.,* any noun in the application). The use of ordinal numbers is not to imply or create any particular ordering of the elements, nor to limit any element to being only a single element unless expressly disclosed, such as by the use of the terms "before," "after," "single," and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and" unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

## Claims

1. A method comprising:
receiving a first velocity model of a subsurface region, comprising a three-dimensional (3D) grid of voxels comprising respective first velocity values, and having a first spatial resolution;
receiving a second velocity model of the subsurface region, comprising a second 3D grid of voxels comprising respective second velocity values, and having a second spatial resolution higher than the first spatial resolution;
generate a reference travel-time model from the first velocity model, the reference travel-time model comprising a third 3D grid of voxels comprising respective reference travel-time values;
processing the second velocity model corrected with a correction term to generate a candidate travel-time model comprising a fourth 3D grid of voxels comprising respective candidate travel-time values;
updating the correction term to minimize a measure of difference between the respective reference travel-time values of the third 3D grid and the respective candidate travel-time values of the fourth 3D grid, to obtain an updated correction term; and
adding the updated correction term to the second velocity model to obtain an updated second velocity model of the subsurface region.

2. The method of claim 1, wherein updating further comprises:
iteratively performing:
generating a corrected second velocity model, comprising the second velocity model and the corrected term,
computing the candidate travel-time model of the corrected second velocity model,
computing the measure of difference between the candidate travel-time model and the reference travel-time model,
computing a gradient value of the measure of difference,
modifying the correction term using the gradient value to the correction term to minimize the measure of difference,
until the measure of difference satisfies a tolerance threshold; and
assigning the corrected second velocity model as the updated second velocity model, preferably further comprising:
generating, using the updated second velocity model, a seismic image of the subsurface region; and
transmitting the seismic image to a seismic imaging application.

3. The method of claim 1 or 2, further comprising:
selecting initial travel-time values of a source distribution, wherein the source distribution approximates laterally varying image-ray travel times, and wherein grid values of the reference travel-time model include laterally varying image-ray travel times;
assigning the initial travel-time values respectively to a subset of voxels of the reference travel-time model comprising a boundary portion of the reference travel-time model; and
propagating, by an eikonal solver, using the first velocity model, the initial travel-time values through the third 3D grid of the reference travel-time model, to obtain the reference travel-time model.

4. The method of any one of the preceding claims, wherein generating the candidate travel-time model further comprises:
generating a corrected second velocity model, comprising the second velocity model and the corrected term;
selecting initial travel-time values of a source distribution, wherein the source distribution approximates laterally varying image-ray travel times;
assigning the initial travel-time values respectively to a subset of voxels of the candidate travel-time model corresponding to a boundary portion of the candidate travel-time model; and
propagating, by an eikonal solver, using the corrected second velocity model, the initial travel-time values through the fourth 3D grid of the candidate travel-time model, to obtain the candidate travel-time model, wherein grid values of the candidate travel-time model include laterally varying image-ray travel times, wherein propagating further comprises:
evaluating the grid values of the candidate travel-time model at the first spatial resolution of the first velocity model.

5. The method of any one of the preceding claims, further comprising:
executing an adjoint computation function to determine a gradient value of the measure of difference and/or further comprising:
executing a gradient computation method to determine a gradient value of the measure of difference, wherein the gradient computation method comprises an ensemble Kalman method, a Monte Carlo Markov chain method, and a stochastic-gradient method.

6. The method of any one of the preceding claims, wherein:
a first vector space defined by a linear smoothing operator comprises the first velocity model, and the correction term,
a second vector space comprises the second velocity model, and
the first vector space and the second vector space are mutually exclusive.

7. A system, comprising:
at least one computer processor;
a kinematic model engine, executing on the at least one computer processor, and configured to:
receive a first velocity model of a subsurface region, comprising a three-dimensional (3D) grid of voxels comprising respective first velocity values, and having a first spatial resolution,
receive a second velocity model of the subsurface region, comprising a second 3D grid of voxels comprising respective second velocity values, and having a second spatial resolution higher than the first spatial resolution,
generate a reference travel-time model from the first velocity model, the reference travel-time model comprising a third 3D grid of voxels comprising respective reference travel-time values, and wherein the reference travel-time model corresponds to the first velocity model,
process the second velocity model corrected with a correction term to generate a candidate travel-time model comprising a fourth 3D grid of voxels comprising respective candidate travel-time values,
update the correction term to minimize a measure of difference between the respective reference travel-time values of the third 3D grid and the respective candidate travel-time values of the fourth 3D grid, to obtain an updated correction term, and
add the updated correction term to the second velocity model to obtain an updated second velocity model of the subsurface region.

8. The system of claim 7, wherein the kinematic model engine is further configured to:
generate a corrected second velocity model, comprising the second velocity model and the correction term;
compute, by an eikonal solver, the candidate travel-time model of the corrected second velocity model;
compute the measure of difference between the candidate travel-time model and the reference travel-time model;
compute, by a gradient generator, a gradient value of the measure of difference;
modify the correction term using the gradient value to minimize the measure of difference, until the measure of difference satisfies a tolerance threshold; and
assign the corrected second velocity model as the updated second velocity model.

9. The system of claim 7 or 8, further comprising:
a seismic image generator, executing on the at least one computer processor, and configured to:
generate, using the updated second velocity model, a seismic image of the subsurface region; and
transmit the seismic image to a seismic imaging application.

10. The system of any one of the claims 7 - 9, wherein the kinematic model engine is further configured to:
select initial travel-time values from a source distribution;
assign the initial travel-time values respectively to a subset of voxels of the reference travel-time model; and
propagate, by an eikonal solver, using the first velocity model, the initial travel-time values through the third 3D grid of the reference travel-time model, to obtain the reference travel-time model.

11. The system of any one of the claims 7 - 10, wherein the kinematic model engine is further configured to:
generate a corrected second velocity model, comprising the second velocity model and the correction term;
select initial travel-time values from a source distribution, wherein the source distribution approximates laterally varying image-ray travel times;
assign the initial travel-time values respectively to a subset of voxels of the candidate travel-time model; and
propagate, by an eikonal solver, using the corrected second velocity model, the initial travel-time values through the fourth 3D grid of the candidate travel-time model, to obtain the candidate travel-time model, wherein grid values of the candidate travel-time model include laterally varying image-ray travel times, wherein the kinematic model engine is preferably further configured to:
evaluate the grid values of the candidate travel-time model at the first spatial resolution of the first velocity model.

12. The system of any one of the claims 7 - 11, wherein the kinematic model engine is further configured to:
execute, by a gradient generator, an adjoint computation function to determine a gradient value of the measure of difference, and/or wherein the kinematic model engine is further configured to:
execute, by a gradient generator, a gradient computation method to determine a gradient value of the measure of difference, wherein the gradient computation method comprises an ensemble Kalman method, a Monte Carlo Markov chain method, and a stochastic-gradient method.

13. The system of any one of the claims 7 - 12, wherein:
a first vector space defined by a linear smoothing operator comprises the first velocity model, and the correction term,
a second vector space comprises the second velocity model, and
the first vector space and the second vector space are mutually exclusive.

14. A non-transitory computer readable medium comprising computer readable program code, for causing a computer system to perform operations comprising:
receiving a first velocity model of a subsurface region, comprising a three-dimensional (3D) grid of voxels comprising respective first velocity values, and having a first spatial resolution;
receiving a second velocity model of the subsurface region, comprising a second 3D grid of voxels comprising respective second velocity values, and having a second spatial resolution higher than the first spatial resolution;
generate a reference travel-time model from the first velocity model, the reference travel-time model comprising a third 3D grid of voxels comprising respective reference travel-time values;
processing the second velocity model corrected with a correction term to generate a candidate travel-time model comprising a fourth 3D grid of voxels comprising respective candidate travel-time values;
updating the correction term to minimize a measure of difference between the respective reference travel-time values of the third 3D grid and the respective candidate travel-time values of the fourth 3D grid, to obtain an updated correction term; and
adding the updated correction term to the second velocity model to obtain an updated second velocity model of the subsurface region.

15. The non-transitory computer readable medium of claim 14, wherein the operations further comprise:
iteratively performing:
generating a corrected second velocity model, comprising the second velocity model and the corrected term,
computing the candidate travel-time model of the corrected second velocity model,
computing the measure of difference between the candidate travel-time model and the reference travel-time model,
computing a gradient value of the measure of difference,
modifying the correction term using the gradient value to the correction term to minimize the measure of difference,
until the measure of difference satisfies a tolerance threshold;
assigning the corrected second velocity model as the updated second velocity model;
generating, using the updated second velocity model, a seismic image of the subsurface region; and
transmitting the seismic image to a seismic imaging application.
